# EUROPÄISCHE PATENTSCHRIFT

(11) **EP 2 268 749 B1**
(45) Veröffentlichungstag und Bekanntmachung des Hinweises auf die Patenterteilung: **10.08.2011**
(21) Anmeldenummer: 09733642.4
(22) Anmeldetag: 15.04.2009
(51) Int. Cl.: C09D 11/02

(54) **MIGRATIONSARME OFFSETDRUCKFARBE**
LOW-MIGRATION OFFSET PRINTING INK
ENCRE OFFSET À FAIBLE TAUX DE MIGRATION

(30) Priorität: 16.04.2008 DE 102008019275
(43) Veröffentlichungstag der Anmeldung: 05.01.2011
(73) Patentinhaber: Flint Group Germany GmbH, 70469 Stuttgart (DE)
(72) Erfinder: FRANK, Erich, 73033 Göppingen (DE); SCHRÖTTER, Emil, 53773 Hennef (DE); SEYER, Hans Peter, 60388 Frankfurt (DE)
(74) Vertreter: Schuck, Alexander
(86) Internationale Anmeldenummer: PCT/EP2009/054476
(87) Internationale Veröffentlichungsnummer: WO 2009/127664

(56) Entgegenhaltungen:
- WO-A-2004/081127
- DE-A1- 10 311 588
- DE-A1- 10 360 391
- DE-A1- 19 653 828

## Beschreibung

Die Erfindung betrifft eine Offsetdruckfarbe auf Basis eines Kotophonium-modifizierten Phenolharzes, eines Maleinatharzes und/oder eines Kohlenwasserstoffharzes als Harzkomponente.

Offsetdruckfarben enthalten im Allgemeinen ein Hartkomponente, Pigmente, Lösungsmittel, sowie gegebenenfalls Wachse, Füllstoffe und Trockenstoffadditive. Als Harze kommen Kolophonium-modifizierte Phenolharze, Maleinatharze (Reaktionsprodukte aus Baumharz (Kolophonium) und Phenol oder Maleinsäure) und/oder Kohlenwasserstoffharze (Polymerisate ungesättigter Kohlenwasserstoffverbindungen) und/oder Alkydharze, oder deren Gemische, zum Einsatz.

Als Lösungsmittel werden so genannte trocknende Öle eingesetzt, hauptsächlich Pflanzenöle wie Leinöl, Sojaöl und Holzöl. Daneben kommen Mineralöle zum Einsatz, in der Regel Feinfraktionen aus Gasöl. Daneben oder als Ersatz der Mineralöle werden auch mit kurzkettigen Alkoholen veresterte Fettsäuren aus Pflanzenölen verwendet.

Offsetfarben für den Bogenoffsetdruck trocknen durch zwei verschiedene Vorgänge. Direkt nach dem Druck penetrieren die niedrig viskosen Bestandteile wie Mineralöl oder Pflanzenölester in den Bedruckstoff. Dadurch wird die Farbe so viskos, dass sie nicht mehr klebrig ist. Diesen Vorgang nennt man Wegschlagen.

Im Anschluss an das Wegschlagen erfolgt die oxidative Trocknung. Bei der oxidativen Trocknung kommt es zu einer durch das Trockenstoffadditiv beschleunigten Reaktion der trocknenden Öle mit dem Luftsauerstoff. Dadurch wird ein polymeres Netzwerk aus dem trocknenden Öl und dem Alkydharz gebildet.

In der EU-Verordnung 1935/2004 über "Materialien und Gegenstände, die dazu bestimmt sind, mit Lebensmitteln in Berührung zu kommen" wird festgelegt, dass "Materialien und Gegenstände, einschließlich aktiver und intelligenter Materialien und Gegenstände, nach guter Herstellungspraxis so herzustellen sind, dass sie unter den normalen oder vorhersehbaren Verwendungsbedingungen keine Bestandteile auf Lebensmittel in Mengen abgeben, die geeignet sind, a) die menschliche Gesundheit zu gefährden, oder b) eine unvertretbare Veränderung der Zusammensetzung der Lebensmittel herbeizuführen, oder c) eine Beeinträchtigung der organoleptischen Eigenschaften der Lebensmittel herbeizuführen."

Präzisiert wird dies noch in der neueren EU-Verordnung 2023/2006. Darin heißt es, dass Druckfarben zur Verwerdung auf der vom Lebensmittel abgewandten Seite von Materialien und Gegenständen so zusammengesetzt sein und/oder so verwendet werden müssen, dass Substanzen nicht von der bedruckten Oberfläche auf die Lebensmittelkontaktseite a) durch das Trägermaterial hindurch oder b) infolge eines Abklatsches im Stapel oder im Rollenwickel in Konzentrationen übergehen, die zu Substanzwerten in dem betreffenden Lebensmittel führen, die nicht mit den Anforderungen von Artikel 3 der Verordnung (EG) Nr. 1935/2004 in Einklang stehen.

Bei der oxidativen Trocknung werden Spaltprodukte, unter anderem Aldehyde, freigesetzt. Diese Aldehyde sind die Ursache für Geschmacksübertragungen auf empfindliche Produkte wie z. B. Schokolade. Veränderungen von Geruch und Geschmack des Verpackungsgutes werden nach EN 1230-2, Papier und Pappe vorgesehen für den Kontakt mit Lebensmitteln, geprüft. Hierbei müssen die ermittelten Werte Kleiner als 2 sein, um den Anforderungen zu entsprechen.

Außerdem penetrieren die beim Wegschlagen in den Karton eindringenden niedrigviskosen Mineralöle oder Pftanzenölester nicht nur in den Karton ein, sondern migrieren durch den Karton hindurch, so dass auch auf der Rückseite des Kartons diese Substanzen gefunden werden. Von der Rückseite können sie dann bei Fehlen einer weiteren funktionellen Verpackung auf das verpackte Lebensmittel übergehen. Sowohl der Übergang der bei der Trocknung entstehenden Aldehyde als auch der Übergang der Mineralöle und Pflanzenölester muss, um den Anforderung der beiden Verordnungen zu genügen, so weit wie möglich unterbunden werden.

Als Stand der Technik sind schon seit längerer Zeit Druckfarben bekannt, die durch Verzicht auf trocknende Öle die Bildung von Aldehyden vermeiden und so das Problem der Geschmacksveränderung von empfindlichen Genussmitteln wie z.B. Schokolade lösen.

Mit den in DE 19653828 C2 und in WO 2005/090498 A1 offenbarten Druckfarben wird das Problem der Migration von Druckfarbenbestandteilen dadurch zu lösen versucht, dass als einzige Komponente mit einem Molekulargewicht von kleiner 1000 Stoffe eingesetzt werden, die aufgrund ihres besonders großen sterischen Raumbedarfs nicht oder nur in sehr geringen Mengen durch den Bedruckstoff migrieren. So werden gemäß DE 196 53 828 C2 in Offsetdruckfarben, welche ein Kolophonium-modifiziertes Phenolharz, ein Maleinatharz, ein modifiziertes Kohlenwasserstoffharz oder einen Kolophoniumharzester umfassen, als Lösungsmittel Fettsäureester von mehrwertigen Alkoholen mit hohem sterischen Raumbedarf eingesetzt. Die Fettsäuren weisen dabei eine Kohlenstoffkettenlänge von 8-26 C-Atomen auf. Als bevorzugte mehrwertige Alkohole werden Trimethylolpropan, Pentaerythrit und Dipentaerythrit genannt. Gemäß WO 2005/090498 A1 werden als Lösungsmittel Polycarbonsäureester von aromatischen Polycarbonsäuren, insbesondere Ester von Trimellithsäure mit C₈-C₁₀-Alkoholen, eingesetzt. Daneben werden als weitere Lösungsmittelkomponente Pflanzenöle wie Kokosöl mit verwendet.

Der große sterische Raumbedarf führt zwar einerseits zu niedrigen Migrationswerten, andererseits aber wird das Wegschlagen stark negativ beeinflusst. Dieses langsame Wegschlagen wird auch von den die Druckfarben einsetzenden Druckereien allgemein bemängelt. Weiterhin liegen für die Stoffe keine vollständigen toxikologischen Prüfungen vor, so dass gemäß der EuPIA-Leitlinie "Druckfarben zur Verwendung auf der vom Lebensmittel abgewandten Oberfläche von Lebensmittelverpackungen und Gegenständen" der für nicht vollständig untersuchte Materialien einzuhaltende Grenzwert für die Migration von <10 ppb spätestens ab 2015 einzuhalten ist.

Aufgabe der Erfindung ist es, migrationsarme Offsetdruckfarben zum Bedrucken von Lebensmittelverpackungen bereitzustellen, die gleichzeitig ein schnelles Wegschlagen zeigen.

Gelöst wird die Aufgabe durch eine Offsetdruckfarbe enthaltend
A) ein oder mehrere Pigmente,
B) ein oder mehrere Harze, ausgewählt aus der Gruppe bestehend aus Kolophonium-modifiziertem Phenolharz, Maleinatharz, Kohlenwasserstoffharzen und Alkydharzen,
C) ein oder mehrere Lösungsmittel,
D) gegebenenfalls weitere Additive wie Wachse, Trockenstoffadditive und Füllstoffe,
wobei das Lösungsmittel ein oder mehreres Cyclohexandicarbonsäuredialkylester enthält.

Die Pigmente A) sind zumindest in Öl und Wasser unlösliche, chemisch hergestellte Farbkörper. Pigmente sind im Allgemeinen in Mengen von 5 bis 40 Gew.-%, vorzugsweise 10 bis 30 Gew.-%, bezogen auf alle Druckfarbenbestandteile, enthalten. Eine Auflistung geeigneter Pigmente enthält W. Herbst, K. Hunger: Industrielle Organische Pigmente, VCH Verlagsgesellschaft 1. Auflage 1987.

Die erfindungsgemäßen Druckfarben können einen oder mehrere der unter B) genannten Harztypen enthalten. Daneben können sie optional Alkydharze enthalten, bevorzugt Alkydharze von ungesättigten Fettsäuren. Alkydharze können in Mengen von 0 bis 25 Gew.-%, bezogen auf das Gewicht aller Drucktarbenbestandteile, enthalten sein. Bevorzugt enthalten die Druckfarben als Harz Kolophonium-modifizierte Phenolharze oder Maleinatharze oder ein Gemisch aus beiden Typen. Insgesamt beträgt der Harzgehalt der erfindungsgemäßen Druckfarben im Allgemeinen 10 bis 40 Gew.-%, bevorzugt 15 bis 35 Gew.-%, besonders bevorzugt 20 bis 30 Gew.-%.

Die erfindungsgemäßen Druckfarben enthalten als Lösungsmittel einen Cyclohexandicarbonsäuredialkylester. Daneben können weitere Lösungsmittel enthalten sein, wie Fettsäureester. Bevorzugt sind Fettsäureester von gesättigten Fettsäuren. Die Fettsäureester können in Mengen von 0 bis 20 Gew.-%, bevorzugt 0 bis 10 Gew.-%, bezogen auf das gesamte Lösungsmittelgemisch enthalten sein. Insgesamt beträgt der Lösungsmittelgehalt im Allgemeinen 30 bis 85 Gew.-%, bevorzugt 35 bis 70 Gew.-%, besonders bevorzugt 50 bis 60 Gew.-%. Vorzugsweise enthalten die erfindungsgemäßen Druckfarben keine Mineralöle als Lösungsmittelbestandteil. Vorzugsweise enthalten sie auch keine so genannten trocknenden Öle als Lösungsmittelbestandteil.

Besonders bevorzugt enthalten die erfindungsgemäßen Druckfarben als Lösungsmittel überwiegend oder sogar ausschließlich den oder die Cyclohexan-1,2-dicarbonsäureester als Lösungsmittel, das heißt das Lösungsmittel besteht zu mindestens 80% oder sogar zu mindestens 90%, in einer speziellen Ausführungsform sogar zu 100% aus dem oder den Cyclohexan-1,2-dicarbonsäureestern.

Im Allgemeinen weisen die erfindungsgemäß eingesetzten Cyclohexan-1,2-dicarbonsäureester Alkylreste mit 3 bis 18, bevorzugt 5 bis 13, besonders bevorzugt 7 bis 11, insbesondere 9 C-Atome auf, wobei die Alkylreste verzweigt oder geradkettig sein können. Geeignete Cyclohexan-1,2-dicarbonsäureester mit Alkylresten mit 3 bis 18 C-Atomen sind in US 2006/0178446, Absätze [0034] bis [0036] aufgelistet. Die Cyclohexan-1,2-dicarbonsäureester können Mischester sein, also Alkylreste unterschiedlicher Kettenlänge enthalten. Im Allgemeinen sind die Alkylreste verzweigt, wobei zahlreiche unterschiedliche isomere Formen von Alkylresten der gleichen Kettenlänge in den Cyclohexan-1,2-dicarbonsäureestern vorkommen könnten. Die erfindungsgemäß eingesetzten Cyclohexan-1,2-dicarbonsäureester Alkylreste sind also häufig Isomerengemische.

Geeignet sind beispielsweise die in WO 99/32427 offenbarten Cyclohexan-1,2-dicarbonsäureester:
Cyclohexan-1,2-dicarbonsäuredi(isopentyl)ester, erhältlich durch Hydrierung von Di(isopentyl)phthalat mit der Chemical Abstracts Registry Nummer (im Folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C₉-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C₇₋₁₁-Ester der Cyclohexandicarbonsäure, erhältlich durch Hydrierung des entsprechenden Phthalsäureesters mit der CAS Nr. 68515-42-4;
ein 1,2-Di-C₇₋₁₁ -Ester der Cyclohexandicarbonsäure, erhältlich durch Hydrierung der Di-C₇₋₁₁-Phthalate mit folgenden CAS Nr.:111 381-89-6, 111 381 90-9, 111 381 91-0, 68515-44-6, 68515-45-7 und 3648-20-7;
ein 1,2-Di-C₉₋₁₁ -Ester der Cyclohexandicarbonsäure, erhältlich durch Hydrierung eines Di-C₉₋₁₁-Phthalats mit der CAS Nr. 98515-43-5;
ein 1,2-Di(isodecyl)cyclohexandicarbonsäureester, erhältlich durch Hydrierung eines Di(isodecyl)phthalats, das hauptsächlich aus Di-(2-propylheptyl)phthalat besteht;
ein 1,2-Di-C₇₋₉-Cyclohexandicarbonsäureester, erhältlich durch Hydrierung des entsprechenden Phthalsäureesters, der verzweigtkettige oder lineare C₇₋₉-Alkylester-gruppen aufweist; beispielsweise als Ausgangsprodukte verwendbare Phthalate haben die folgende CAS Nr.:
   Di-C_{7,9}-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.

Erfindungsgemäß sind auch Hydrierprodukte von Phthalsäure-Mischestern mit C₁₀- und C₁₃-Alkoholen verwendbar, wie sie in der DE-A 10032580.7 beschrieben sind.

Besonders bevorzugt sind die Dinonylester der Cyclohexan-1,2-dicarbonsäure, beispielsweise die oben genannten Dinonylester(gemische), oder der Cyclohexan-1,2-dinonylester, welcher unter dem Namen Hexamoll^{®} DINCH der Fa. BASF SE kommerziell erhältlich ist.

Der Cyclohexan-1,2-dicarbonsäuredinonylester wird bereits als innovativer Weichmacher in Kunststoffen eingesetzte. Daher ist die Substanz gut toxikologisch untersucht und als nicht toxisch, nicht krebserregend, nicht mutagen und nicht reprotoxisch eingestuft worden. Die zulässige tägliche Aufnahme dieser Substanz ist von der EFSA [European Food Safety Authority] auf 1 mg pro kg Körpergewicht und Tag festgelegt worden, was bei einem Körpergewicht von 60 kg und einer Aufnahme von 1 kg Lebensmitteln einem Grenzwert von 60 mg/kg, also 60 ppm entspricht. Damit liegt dieser Grenzwert ca. 6000mal höher als der Grenzwert für nicht toxikologisch untersuchte Substanzen.

Die erfindungsgemäßen Druckfarben zeichnen sich durch ein schnelles Wegschlagen aus.

Daneben können die erfindungsgemäßen Druckfarben als weitere Additive Füllstoffe, Wachse enthalten. Die Menge aller weiteren Additive kann bis zu 15 Gew.-%, bezogen auf alle Druckfarbenbestandteile, betragen. Füllstoffe sind in der Regel natürliche anorganische Mineralien wie Kaolin, Calciumcarbonat oder Talkum. Sind Füllstoffe enthalten, so sind sie im Allgemeinen in Mengen von 1 bis 10 Gew.-% enthalten. Als Wachse werden relativ kurzkettige Polyethylene oder Polytetrafluorethylene eingesetzt. Wachse sind bevorzugt in Mengen von 0 bis 5 Gew.-%, bezogen auf alle Bestandteile der Druckfarbe, enthalten.

Bevorzugte erfindungsgemäße Offsetdruckfarben enthalten
A) 5 bis 40 Gew.-% Pigmente,
B) 10 bis 40 Gew.-% Harze,
C) 30 bis 85 Gew.-% Lösungsmittel, und
D) 0 bis 15 Gew.-% weitere Additive, darunter insbesondere Füllstoffe und Wachse.

Gegenstand der Erfindung ist auch die Verwendung der Offsetdruckfarben zum Herstellen von Lebensmittelverpackungen. Gegenstand der Erfindung ist weiterhin die Verwendung von Cyclohexandicarbonsäuredialkylester, insbesondere von Cyclohexan-1,2-dicarbonsäuredinonylestern, als Lösungsmittelbestandteil, insbesondere als ausschließlicher Lösungsmittelbestandteil, für Offsetdrucklarben.

Die Erfindung wird durch die nachstehenden Beispiele näher erläutert.

### Beispiele

Es wurden durch Vermischen der einzelnen Komponenten Druckfarben der nachstehenden Zusammensetzungen hergestellt.

### Beispiel 1

| Materialname | Lieferant | Material | Gew.-% |
|---|---|---|---|
| Raven 760 Ultra | Cabot | Pigment Schwarz PB7 | 20,00 |
| Phtalocyanin Blue RS 1517C | Capelle | Pigment Blau PB 15:1 | 3,00 |
| Ceridust 3620 | Clariant | Polyäthylen Wachspulver | 1,00 |
| Ecorez 69 | Hexion | Phenolmodifiziertes Kolophoniumharz | 22,27 |
| Dorox D561 | DEA | Alumminium-organische Verbindung | 0,35 |
| Hexamoll DINCH | BASF | 1,2-Cyclohexanedicarbonsäuredionylester | 53,38 |
| | | | 100,00 |

### Beispiel 2

| Materialname | Lieferant | Material | Gew.-% |
|---|---|---|---|
| Print Rubin 4570 | Flint Group Pigments | Pigment Rot PR 57:1 | 20,00 |
| Ceridust 3620 | Clariant | Polyäthylen Wachspulver | 1,00 |
| Tergraf940 | Cray Valley | Phenolmodifiziertes Kolophoniumharz | 23,18 |
| Dorox D561 | DEA | Alumminium organische Verbindung | 0,36 |
| Hexamoll DINCH | BASF | 1,2-Cyclohexanedicarbonsäuredinonylester | 55,46 |
| | | | 100,00 |

### Beispiel 3

| Materialname | Lieferant | Material | Gew.-% |
|---|---|---|---|
| Print Blue 7072 | Flint Group Pigments | Pigment Blau PB 15:3 | 19,50 |
| Lithosperse 7005CS | NRC | Kaolin | 5,00 |
| Ceridust 3620 | Clariant | Polyäthylen Wachspulver | 1,00 |
| Tergraf 940 | Cray Valley | Phenolmodifiziertes Kolophoniumharz | 21,54 |
| Dorox D561 | DEA | Aluminium-organische Verbindung | 0,34 |
| Hexamoll DINCH | BASF | 1,2-Cyclohexanecarbonsäuredionylester | 52,62 |
| | | | 100,00 |

### Beispiele 4

| Materialname | Lieferant | Material | Gew.-% |
|---|---|---|---|
| Print Yellow 1363 | Flint Group Pigments | Pigment Gelb PY 174 | 13 |
| AF31 | BASF | Polyäthylen-Wachspulver | 1 |
| Resinall 910 | Resinall | Phenolmodifiziertes Kolophoniumharz | 28 |
| Dorox D561 | DEA | Alumminium-organische Verbindung | 0,4 |
| Hexamoll DINCH | BASF | 1,2-Cyclohexanedicarbonsäuredionylester | 57,6 |
| | | | 100 |

Die Farben nach diesen Rezepturen wurden auf einer Druckmaschine Speedmaster SM 74 auf gestrichenem Zellstoffkarton verdruckt. Die Verarbeitbarkeit, Scheuerfestigkeit, Lackhanung und Weiterverarbeitbarkeit entsprechen den Farben des Standes der Technik, z. B. Novasens P660 PREMIUM von Flint Group Germany GmbH oder MGA Corona OD der Fa. Huber. Allerdings wurde überraschenderweise ein deutlich schnelleres Wegschlagen als bei den dem Stand der Technik entsprechenden Druckfarben gefunden.

Zur Quantifizierung des Wegschlagens wird die Farbe zunächst auf einem Probedruckgerät (Fa. Prüfbau) auf einen festgelegten Bedruckstoff angedrückt. Auf den Druck wird dann ein weiterer Papierstreifen aufgelegt. Nach 15, 30, 60 und 120 s wird jeweils ein Viertel dieses Streifens auf den vorher angefertigten Probedruck ausgedrückt. An der Farbübertragung bei diesem Aufdrücken kann der Wegschlagprozess verfolgt werden. Um dieses optische Ergebnis in Zahlen auszudrücken besteht z.B. die Möglichkeit, einen Vergleichsstandard zu erstellen. Dieser Vergleichsstandard besteht aus fünf Wegschlagtests, auf denen in Stufen das Wegschlagen von sehr schnell (1) bis sehr langsam (5) dargestellt ist.

Während das Wegschlagen der dem Stand der Technik entsprechenden Druckfarben (MGA Corona OD der Fa. Huber, entsprechend der DE 196 53 828 C2) nach der oben erwähnten Vergleichsskala mit 5 (Gelb), 5 (Magenta), 5 (Cyan) und 4 (Schwarz) bewertet wurde, wurden die die Druckfarben aus dieser Erfindung mit 4 (Gelb gemäß Beispiel 4), 2 (Magenta gemäß Beispiel 2), 2 (Cyan gemäß Beispiel 3) und 2 (Schwarz gemäß Beispiel 1) bewertet.

Dieser sehr deutliche Unterschied in der Geschwindigkeit des Wegschlagens kann in der in der täglichen Praxis einer Druckerei den Unterschied zwischen nur mit Problemen weiterverarbeitbaren und problemlos weiterverarbeitbaren Druckfarben ausmachen.

Andrucke der nach obigen Rezepten angefertigten Farben wurden in einem Test nach EN 1230-2 geprüft. Bei dieser Prüfung werden Andrucke der zu prüfenden Druckfarben zusammen mit geriebener Schokolade in geschlossenen Gläsern über einer gesättigten Kochsalzlösung zur Einstellung einer definierten Luftfeuchtigkeit 48 h lang gelagert. Anschließend werden die Unterschiede im Geschmack der Schokolade im Vergleich zu einer Blindprobe durch ein Panel von mindestens 5 Personen bewertet. Dabei können folgende Bewertungen abgegeben werden: 0 = keine wahrnehmbare Geschmacksübertragung; 1 = Geschmacksübertragung, gerade eben wahrnehmbar, aber noch schwer zu definieren; 2 = mäßige Geschmacksübertragung; 3 = mäßig starke Geschmacksübertragung; 4 = starke Geschmacksübertragung. Es ergaben sich folgende Werte: 1 für Gelb, 0 für Magenta, 1 für Cyan und 1 für Schwarz. Die ermittelten Werte lagen um einen Wert von 1 und damit deutlich unter dem zulässigen Maximalwert von 2.

Teile der gedruckten Muster mit besonders hoher Farbbelegung (400%, d. h. alle vier Farben übereinander) wurden gleich nach dem Druck in Aluminiumfolie eingepackt und dem Fabes Institut München zur Migrationsanalyse mit Tenax als Lebensmittelsimulanz übergeben. Die gefundene Migration liegt mit 2 mg/dm² um einen Faktor 5 niedriger als der für diese Substanz erlaubt Wert von 10 mg/dm².

## Patentansprüche

1. Offsetdruckfarbe enthaltend
A) ein oder mehrere Pigmente,
B) ein oder mehrere Harze, ausgewählt aus der Gruppe bestehend aus kolophonium-modifiziertem Phenolharz, Maleinatharz, Kohlenwasserstoffharzen und Alkydharzen,
C) ein oder mehrere Lösungsmittel,
D) gegebenenfalls weitere Additive wie Wachse, Trockenstoffadditive und Füllstoffe,
**dadurch gekennzeichnet, dass** das Lösungsmittel C) mindestens 80 Gew.-%, bezogen auf alle Lösungsmittelbestandteile eines oder mehrerer Cyclohexan-1,2-dicarbonsäuredialkylester enthält.

2. Offsetdruckfarbe nach Anspruch 1, **dadurch gekennzeichnet, dass** der Cyclohexan-1,2-dicarbonsäuredialkylester ein Di-C₅-C₁₃-alkylester ist.

3. Offsetdruckfarbe nach Anspruch 2, **dadurch gekennzeichnet, dass** der Cyclohexan-1,2-dicarbonsäuredialklester ein D₁-C₇-C₁₁-alkylester ist.

4. Offsetdruckfarbe nach Anspruch 3, **dadurch gekennzeichnet, dass** der Cyclohexan-1,2-dicarbonsäuredialkylester ein Dinonylester ist.

5. Druckfarbe nach einem der Ansprüche 1 bis 4, **dadurch gekennzeichnet, dass** sie
A) 5 bis 40 Gew.-% Pigmente
B) 10 bis 40 Gew.-% Harze
C) 30 bis 85 Gew.-% Lösungsmittel, und
D) 0 bis 15 Gew.-% weitere Additive
enthält.

6. Offsetdruckfarbe nach einem der Ansprüche 1 bis 5, **dadurch gekennzeichnet, dass** keine Mineralöle enthalten sind.

7. Verwendung einer Druckfarbe nach einem der Ansprüche 1 bis 6 zum Herstellen von Lebensmittelverpackungen.

8. Verwendung von Cyclohexandicarbonsäuredialkylester als Lösungsmittel in Offsetdruckfarben, **dadurch gekennzeichnet, dass** das Lösungsmittel, bezogen auf alle Lösungsmittelbestandteile, mindestens 80 Gew.-% Cyclohexandicarbonsäuredialkylester enthält.

## Claims

1. Offset printing ink comprising
A) one or more pigments,
B) one or more resins chosen from the group consisting of colophony-modified phenolic resin, maleate resin, hydrocarbon resins and alkyd resins,
C) one or more solvents,
D) optionally further additives, such as waxes, drying substance additives and fillers,
**characterized in that** the solvent C) contains at least 80 wt.%, based on all the solvent constituents, of one or more cyclohexane-1,2-dicarboxylic acid dialkyl esters.

2. Offset printing ink according to claim 1, **characterized in that** the cyclohexane-1,2-dicarboxylic acid dialkyl ester is a di-C₅-C₁₃-alkyl ester.

3. Offset printing ink according to claim 2, **characterized in that** the cyclohexane-1,2-dicarboxylic acid dialkyl ester is a di-C₇-C₁₁-alkyl ester.

4. Offset printing ink according to claim 3, **characterized in that** the cyclohexane-1,2-dicarboxylic acid dialkyl ester is a dinonyl ester.

5. Printing ink according to one of claims 1 to 4, **characterized in that** it comprises
A) 5 to 40 wt.% of pigments
B) 10 to 40 wt.% of resins
C) 30 to 85 wt.% of solvents and
D) 0 to 15 wt.% of further additives.

6. Offset printing ink according to one of claims 1 to 5, **characterized in that** it comprises no mineral oils.

7. Use of a printing ink according to one of claims 1 to 6 for the production of foodstuffs packagings.

8. Use of cyclohexanedicarboxylic acid dialkyl esters as solvents in offset printing inks, **characterized in that** the solvent contains at least 80 wt.% of cyclohexanedicarboxylic acid dialkyl esters, based on all the solvent constituents.

## Revendications

1. Encre offset contenant
A) un ou plusieurs pigments,
B) une ou plusieurs résines, choisies dans le groupe formé par la résine phénolique modifiée à la colophane, la résine maléique, les résines hydrocarbonées et les résines alkydes,
C) un ou plusieurs solvants,
D) éventuellement d'autres additifs comme des cires, des additifs siccatifs et des charges,
**caractérisée en ce que** le solvant C) contient au moins 80% en poids, par rapport à tous les constituants de solvant, d'un ou plusieurs esters dialkyliques d'acide cyclohexane-1,2-dicarboxylique.

2. Encre offset selon la revendication 1, **caractérisée en ce que** l'ester dialkylique d'acide cyclohexane-1,2-dicarboxylique est un ester de di-(alkyle en C₅ à C₁₃).

3. Encre offset selon la revendication 2, **caractérisée en ce que** l'ester dialkylique d'acide cyclohexane-1,2-dicarboxylique est un ester de di-(alkyle en C₇ à C₁₁).

4. Encre offset selon la revendication 3, **caractérisée en ce que** l'ester dialkylique d'acide cyclohexane-1,2-dicarboxylique est un ester de dinonyle.

5. Encre offset selon l'une des revendications 1 à 4, **caractérisée en ce qu'**elle contient
A) 5 à 40% en poids de pigments
B) 10 à 40% en poids de résines
C) 30 à 85% en poids de solvents, et
D) 0 à 15% en poids d'autres additives.

6. Encre offset selon l'une des revendications 1 à 5, **caractérisée en ce qu'**elle ne contient pas d'huiles minérales.

7. Utilisation d'une encre selon l'une des revendications 1 à 6, pour préparer des emballages de produits alimentaires.

8. Utilisation d'un ester dialkylique d'acide cyclohexanedicarboxylique à titre de solvant dans les encres offset, **caractérisée en ce que** le solvant contient au moins 80% en poids, par rapport à tous les constituants de solvant, d'ester dialkylique d'acide cyclohexanedicarboxylique.
